# EUROPEAN PATENT APPLICATION

(11) **EP 2 658 093 A2**
(43) Date of publication of application: **30.10.2013**
(21) Application number: 12193170.3
(22) Date of filing: 19.11.2012
(51) Int. Cl.: H02K 5/167

(54) **Sintered bearing-equipped bldc motor for hair dryer**

(30) Priority: 23.04.2012 KR 20120041970
(71) Applicant: JMW Co. Ltd., Seoul 153-023 (KR)
(72) Inventor: Lim, Tae Hyun, 132-762 Seoul (KR)
(74) Representative: Grünecker, Kinkeldey, Stockmair & Schwanhäusser

(57) **Abstract**

Provided is a BLDC motor for a hair dryer, which includes a sintered bearing to guide rotation of a shaft, instead of using a typical ball bearing. Thus, a rotation shaft is held by fluid dynamic pressure generated by rotation of the BLDC motor, thereby decreasing vibration and noise.

## Description

### BACKGROUND OF THE INVENTION

### Field of the Invention

The present invention relates to a brushless direct current (BLDC) motor for a hair dryer, and more particularly, to a BLDC motor that includes a sintered bearing replacing a typical ball bearing for supporting a driving shaft of the BLDC motor and that uses oil fed to decrease frictional resistance between components, thereby protecting the components from abrasion and damage generated by an operation of the BLDC motor.

### Description of the Related Art

Hair dryers, which are electric devices for drying an object, include a heater therein to heat air, and a fan motor for forcibly blowing the heated air, thereby conveniently drying a human hair or other wet objects. Thus, hair dryers are widely used for home and commercial purposes.

Such a hair dryer may include a brushless direct current (BLDC) motor that is a direct current (DC) motor having no brush and uses a semiconductor device to control current. Since BLDC motors do not require a brush, the service life thereof is long. In addition, since BLDC motors output high torque, they can rotate at high speed. Furthermore, since the control of current at a motor driver circuit is facilitated, speed of a BLDC motor can be efficiently controlled.

An example of such BLDC motors is disclosed in Korean Patent Registration No. 0935158, titled "ROTOR FAN COUPLING APPARATUS OF BLDC MOTOR FOR HAIR DRYER", which has been filed by the present applicant and has been registered.

The BLDC motor includes: a fan main body including a plurality of rotor blades at a rotor fan part thereof; a rotor housing inserted in an inner surface of the fan main body; a rotor frame coupled to the fan main body, the rotor housing, and a rotation shaft; and a fan fixing spring fixedly connecting the fan main body and the rotor frame to each other. Accordingly, the rotor fan part is indirectly coupled to a motor part of the BLDC motor, and thus, the rotor fan part can be coupled and decoupled more easily and efficiently.

A ball bearing may be installed on a motor to support rotation of a rotation shaft of the motor. In this case, since a tolerance range of the rotation shaft is large, when the motor is driven at high speed, vibration and noise level may be increased, and the ball bearing may be easily worn or damaged, thereby decreasing use efficiency of the motor.

### SUMMARY OF THE INVENTION

An object of the present invention is to provide a BLDC motor that includes a high strength sintered bearing formed using a sintering method to replace a typical ball bearing and that is configured to prevent leakage of lubricant, thereby improving durability of the BLDC motor and minimizing vibration and noise due to an operation of the BLDC motor.

According to an aspect of the present invention, there is provided a brushless direct current (BLDC) motor for a hair dryer, including: a rotor housing having a shaft hole, in which a shaft is inserted, in a central portion thereof, wherein a permanent magnet is disposed in the rotor housing, and a blower fan for generating wind is coupled to an upper portion of the rotor housing; a rotor frame having an inner circumference integrally coupled to an upper end of the shaft, and an outer circumference coupled to the rotor housing; a stator core around which a coil is wound, wherein the coil generates torque by interacting with a magnetic field formed from the permanent magnet; a printed circuit board (PCB) coupled to a lower portion of the stator core; a base bracket coupled to the lower portion of the stator core to support the stator core; and a bearing support disposed in a central portion of the base bracket, and supporting a bearing for supporting the shaft, wherein the bearing includes a sintered bearing, a lower bearing cap and a thrust washer are disposed under the bearing support to control a reference position of the shaft, an upper bearing cap is disposed above the bearing support to prevent discharge of oil from the bearing and removal of the bearing, and a heat discharge hole is disposed in a top of the rotor housing to discharge heat from the stator core.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is an exploded perspective view illustrating a BLDC motor for a hair dryer according to an embodiment of the present invention;
FIG. 2 is a partial cut-away exploded perspective view illustrating a BLDC motor according to an embodiment of the present invention;
FIG. 3 is an exploded side view illustrating a BLDC motor according to an embodiment of the present invention;
FIG. 4 is a cross-sectional view illustrating a BLDC motor according to an embodiment of the present invention;
FIG. 5 is an enlarged view illustrating a portion A of FIG. 4;
FIG. 6 is a cross-sectional view illustrating a part of a sintered bearing according to an embodiment of the present invention;
FIG. 7 is a perspective view illustrating the bottom of a blower fan according to an embodiment of the present invention;
FIG. 8 is a perspective view illustrating a state that balance protrusions are removed from a blower fan according to an embodiment of the present invention;
FIG. 9 is an enlarged view illustrating a portion B of FIG. 7;
FIGS. 10 and 11 are perspective views illustrating a balance protrusion according to an embodiment of the present invention; and
FIG. 12 is an exploded perspective view illustrating a sirocco fan type motor according to an embodiment of the present invention.

### DETAILED DESCRIPTION OF EXEMPLARY EMBODIMENTS

Reference will now be made in detail to specific embodiments of the present invention, examples of which are illustrated in the accompanying drawings.

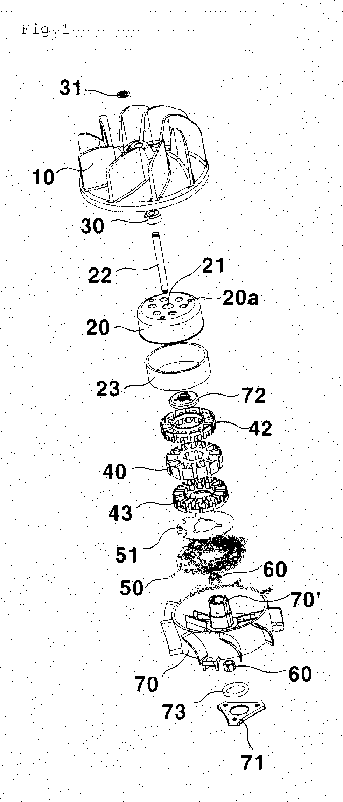

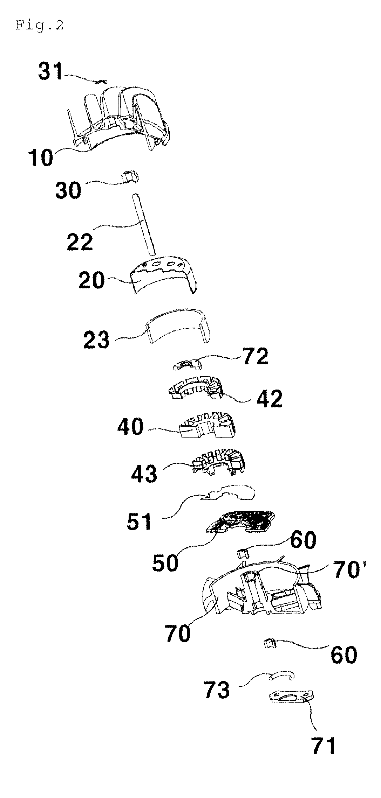

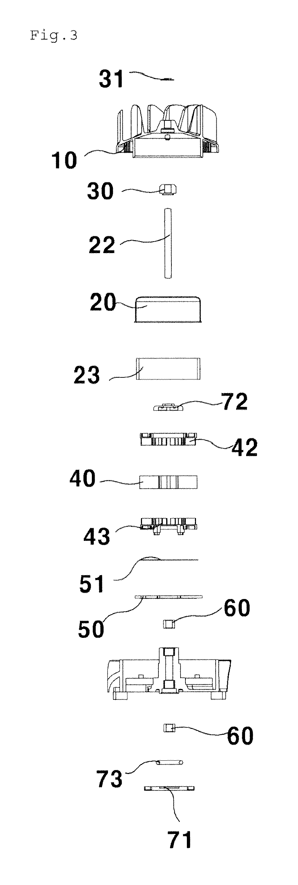

A brushless direct current (BLDC) motor for a hair dryer according to an embodiment of the present invention will now be described with reference to FIGS. 1 to 6. A permanent magnet 23 has a cylindrical shape and is inserted in a rotor housing 20. A shaft 22 constituting a rotation driving shaft is inserted in a shaft hole 21 disposed in a central portion of the rotor housing 20. A blower fan 10, which is a turbo fan for forcibly moving air, is coupled to an upper portion of the rotor housing 20.

A rotor frame 30 is coupled to an upper portion of the shaft 22 to connect the shaft 22 to the rotor housing 20. A stator core 40 is disposed in the rotor housing 20. A coil 41 is wound around the stator core 40, and generates torque by interacting with a magnetic field formed from the permanent magnet 23. A printed circuit board (PCB) 50, on which a circuit for driving a motor is printed, is coupled to a lower portion of the stator core 40. A base bracket 70 is coupled to the lower portion of the stator core 40 to support the stator core 40. A bearing support 70', which supports bearings 60 for supporting the shaft 22, is disposed in a central portion of the base bracket 70.

The bearing 60 includes a sintered bearing formed using a sintering method to improve durability of the bearing 60. A lower bearing cap 71 and a thrust washer 73 are disposed under the bearing support 70' to control a reference position of the shaft 22. An upper bearing cap 72 is disposed above the bearing support 70' to prevent discharge of oil from the bearing 60 and removal of the bearing 60. Heat discharge holes 20a are disposed in the top of the rotor housing 20 to discharge heat from the stator core 40.

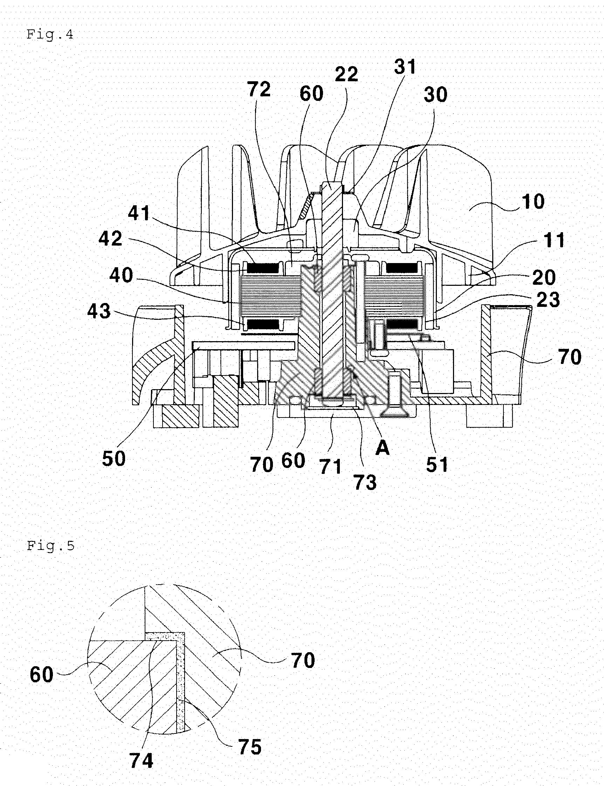

A seat recess 74, in which the bearing 60 is seated, may be disposed in the bearing support 70'. Referring to FIG. 5, a Teflon coating layer 75 may be formed on an inner wall of the seat recess 74 to decrease frictional force and abrasion between the bearing 60 and the inner wall.

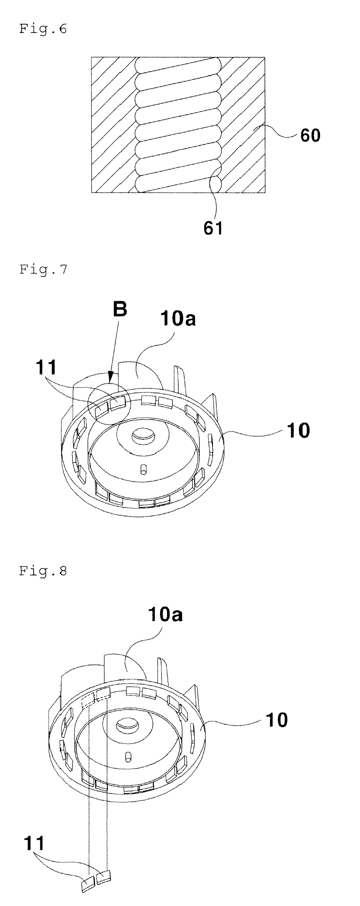

Referring to FIG. 6, an oil guide recess 61 may be formed in a spiral shape on an inner circumferential surface of the bearing 60 to facilitate movement of oil.

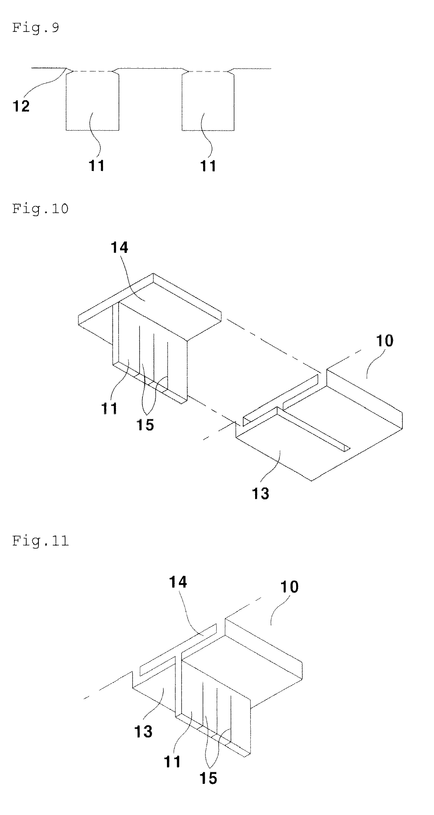

Referring to FIG. 7, balance protrusions 11 are arrayed on a bottom surface of the blower fan 10 along an edge thereof to control a rotation balance of the blower fan 10. Referring to FIG. 9, protrusion removal recesses 12 are disposed at both sides of each balance protrusion 11 to efficiently remove the balance protrusion 11.

An upper washer 31 is coupled to the blower fan 10 to prevent removal of the blower fan 10. An upper insulator 42 and a lower insulator 43 are disposed at the upper and lower sides of the BLDC motor, respectively. A PCB pad 51 prevents noise between the PCB 50 and the coil 41.

An operation of the BLDC motor configured as described above will now be described.

First, when a driving circuit mounted on the PCB 50 supplies current to the coil 41 wound around the stator core 40, magnetic flux is generated and transmitted to the permanent magnet 23 around the stator core 40, thereby rotating the rotor housing 20, the rotor frame 30, and the shaft 22. At this point, a pole detecting device installed on the PCB 50 detects a pole of the permanent magnet 23, and a signal corresponding to the detected pole is transmitted to the driving circuit of the PCB 50 to supply power for magnetizing the coil 41 with a pole different from that of the permanent magnet 23, thereby continually rotating the rotor housing 20, the rotor frame 30, and the shaft 22. Accordingly, the blower fan 10 rotates at high speed so as to forcibly move air from the hair dryer.

During this process, the stator core 40 is stably and fixedly supported by the PCB 50 and the bearing support 70' of the base bracket 70, thereby rotating the rotor housing 20, the rotor frame 30, and the shaft 22 more efficiently.

In particular, since the bearing 60 disposed within the bearing support 70' to support rotation of the shaft 22 is formed using a sintering method, the bearing 60 can stably support high speed rotation of the shaft 22 and minimize a structural tolerance range of a rotation shaft of a typical ball bearing, thereby decreasing vibration and noise.

In addition, oil for improving lubricant characteristics can be efficiently injected into the bearing 60 through the oil guide recess 61 formed in the inner circumferential surface of the bearing 60, and the lower bearing cap 71, the upper bearing cap 72, and the thrust washer 73 prevent discharge of the oil from the bearing 60 and stably support the shaft 22, thereby improving driving efficiency of the shaft 22.

In addition, as illustrated in FIG. 5, the Teflon coating layer 75 is formed on the inner wall of the seat recess 74 to decrease frictional force and abrasion between the bearing 60 and the inner wall, thereby protecting the bearing 60 from abrasion and damage.

Rotation of the blower fan 10 can be efficiently balanced.

That is, since the balance protrusions 11 are arrayed on the bottom surface of the blower fan 10 along the edge thereof to control a rotation balance of the blower fan 10, a balance correction process can be performed in which a balance of the blower fan 10 is measured using a predetermined device, and then, the balance protrusion 11 disposed on a heavy portion of the blower fan 10 is removed to keep a weight balance at a center axis of the blower fan 10, thereby minimizing noise and vibration due to rotation of the blower fan 10.

In particular, since the protrusion removal recesses 12 are disposed on the balance protrusions 11 as illustrated in FIG. 9, the balance protrusions 11 can be removed more quickly and efficiently.

Referring to FIGS. 10 and 11, an attachment structure is added to the balance protrusion 11. In this case, a guide rail 13 is provided on the blower fan 10 to removably attach the balance protrusion 11 thereto, and an attachment 14 is formed on the upper part of the balance protrusion 11 and is removably inserted in the guide rail 13. In addition, vertical cut parts 15 are spaced a certain distance from each other in the balance protrusion 11.

Under this structure, the balance protrusion 11 can be optionally attached or removed, thereby performing a balance correction process more efficiently. Furthermore, the balance protrusion 11 can be partially removed by means of the vertical cut parts 15, thereby performing the balance correction process more accurately.

While this invention has been particularly shown and described with reference to exemplified embodiments thereof, it will be understood by those skilled in the art that various changes in form and details may be made therein without departing from the spirit and scope of the invention.

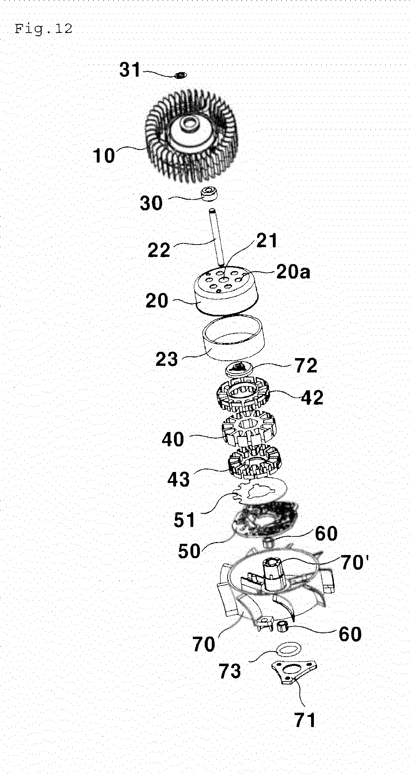

For example, the blower fan 10, which is provided as a turbo fan in the above embodiment, may be provided as a sirocco fan as illustrated in FIG. 12.

According to the embodiments, a BLDC motor for a hair dryer includes a sintered bearing to guide rotation of a shaft, instead of using a typical ball bearing. Thus, a rotation shaft is held by fluid dynamic pressure generated by rotation of the BLDC motor, thereby decreasing vibration and noise.

Furthermore, the BLDC motor is configured to effectively prevent discharge of oil, so as to prevent negative effect due to oil leakage.

In addition, since a balance correction process can be efficiently performed on a blower fan, noise and vibration generated by rotation of the blower fan can be minimized.

It is intended that the present invention covers modifications and variations of this invention provided they come within the scope of the appended claims and their equivalents.

## Claims

1. A brushless direct current (BLDC) motor for a hair dryer, comprising:
a rotor housing (20) having a shaft hole (21), in which a shaft (22) is inserted, in a central portion thereof, wherein a permanent magnet (23) is disposed in the rotor housing (20), and a blower fan (10) for generating wind is coupled to an upper portion of the rotor housing (20);
a rotor frame (30) having an inner circumference integrally coupled to an upper end of the shaft (22), and an outer circumference coupled to the rotor housing (20);
a stator core (40) around which a coil (41) is wound, wherein the coil (41) generates torque by interacting with a magnetic field formed from the permanent magnet (23);
a printed circuit board (PCB) (50) coupled to a lower portion of the stator core (40);
a base bracket (70) coupled to the lower portion of the stator core (40) to support the stator core (40); and
a bearing support (70') disposed in a central portion of the base bracket (70), and supporting a bearing (60) for supporting the shaft (22),
wherein the bearing (60) comprises a sintered bearing,
a lower bearing cap (71) and a thrust washer (73) are disposed under the bearing support (70') to control a reference position of the shaft (22),
an upper bearing cap (72) is disposed above the bearing support (70') to prevent discharge of oil from the bearing (60) and removal of the bearing (60), and
a heat discharge hole (20a) is disposed in a top of the rotor housing (20) to discharge heat from the stator core (40).

2. The BLDC motor of claim 1, wherein the blower fan (10) comprises a turbo fan or a sirocco fan.

3. The BLDC motor of claim 1, wherein a seat recess (74), in which the bearing (60) is seated, is disposed in the bearing support (70'), and a Teflon coating layer (75) is formed on an inner wall of the seat recess (74) to decrease frictional force and abrasion between the bearing (60) and the inner wall.

4. The BLDC motor of claim 1, wherein an oil guide recess (61) is formed in a spiral shape on an inner circumferential surface of the bearing (60) to facilitate movement of oil.

5. The BLDC motor of claim 1 or 2, wherein balance protrusions (11) are arrayed on a bottom surface of the blower fan (10) along an edge thereof to control a rotation balance of the blower fan (10), and
protrusion removal recesses (12) are disposed at both sides of each balance protrusion (11) to efficiently remove the balance protrusion (11).

6. The BLDC motor of claim 1 or 2, wherein balance protrusions (11) are removably attached to a bottom surface of the blower fan (10) along an edge thereof to control a rotation balance of the blower fan (10),
a guide rail (13) is provided on the blower fan (10) to removably attach the balance protrusion (11) thereto,
an attachment (14) is formed on an upper portion of the balance protrusion (11) and is removably inserted in the guide rail (13), and
vertical cut parts (15) are spaced a certain distance from each other in the balance protrusion (11).
